# EUROPEAN PATENT APPLICATION

(11) **EP 4 717 506 A1**
(43) Date of publication of application: **01.04.2026**
(21) Application number: 25205609.8
(22) Date of filing: 30.09.2025
(51) Int. Cl.: B60L 3/10, B60L 15/20, B60T 8/175, B60W 30/18, B60W 10/184

(54) **MOTOR CONTROL UNIT, POWERTRAIN, AND ANTI-SLIP CONTROL METHOD FOR ELECTRIC VEHICLE**

(30) Priority: 30.09.2024 CN 202411393363
(71) Applicant: Huawei Digital Power Technologies Co., Ltd., Shenzhen, Guangdong 518043 (CN)
(72) Inventor: YANG, Peng, Shenzhen, 518043 (CN); SHEN, Tianmin, Shenzhen, 518043 (CN); LU, Chunhong, Shenzhen, 518043 (CN)
(74) Representative: Gill Jennings & Every LLP

(57) **Abstract**

This application provides a motor control unit (610), a powertrain (600), and an anti-slip control method for an electric vehicle (50), applied to the field of electric vehicle technologies, to suppress slipping of an electric vehicle more quickly. The motor control unit (610) is configured to control one drive motor (620) to drive an electric vehicle (50) and configured to control a plurality of wheel end brake apparatuses (522) of the electric vehicle (50), and the plurality of wheel end brake apparatuses (522) are respectively configured to brake a plurality of wheels of the electric vehicle (50). The motor control unit (610) is further configured to: in a process of controlling the one drive motor (620) to drive the electric vehicle (50), in response to slipping of one wheel in the plurality of wheels, control one wheel end brake apparatus (522) corresponding to the one wheel to brake the one wheel. Based on this, when one wheel of the electric vehicle slips, the motor control unit (610) can perform control, to reduce a slipping suppression delay, so as to suppress the slipping of the wheel more quickly.

## Description

### TECHNICAL FIELD

This application relates to the field of electric vehicle technologies, and in particular, to a motor control unit, a powertrain, and an anti-slip control method for an electric vehicle.

### BACKGROUND

With rapid development of electric vehicles, people impose increasingly high requirements on performance of the electric vehicles. When the electric vehicle travels on a road with low adhesion, a wheel of the electric vehicle is prone to slip. When the wheel of the electric vehicle slips, power of the electric vehicle is reduced. In addition, slipping of the wheel of the electric vehicle may also cause instability of the electric vehicle. In some related technologies, the slipping of the wheel may be limited by braking the wheel, but a braking delay is high. The wheel usually slips instantaneously. If the slipping of the wheel cannot be suppressed in a timely manner, the electric vehicle is prone to yawing. Therefore, a solution continues to be provided to resolve the foregoing problem.

### SUMMARY

Embodiments of this application provide a motor control unit, a powertrain, and an anti-slip control method for an electric vehicle, to suppress slipping of an electric vehicle more quickly.

To achieve the foregoing objectives, embodiments of this application provide the following technical solutions.

According to a first aspect, this application provides a motor control unit of an electric vehicle. The motor control unit is configured to control one drive motor to drive the electric vehicle and configured to control a plurality of wheel end brake apparatuses of the electric vehicle, and the plurality of wheel end brake apparatuses are respectively configured to brake a plurality of wheels of the electric vehicle. The motor control unit is further configured to: in a process of controlling the one drive motor to drive the electric vehicle, in response to slipping of one wheel in the plurality of wheels, control one wheel end brake apparatus corresponding to the one wheel to brake the one wheel.

Correspondingly, when the one wheel of the electric vehicle slips, the motor control unit may brake the wheel via the wheel end brake apparatus, and the vehicle control unit does not need to participate in signal transfer. This reduces a slipping suppression delay, and can suppress the slipping of the wheel more quickly.

In an implementation, the motor control unit is configured to obtain a slip rate of the one wheel through calculation based on a motor rotational speed signal output by a resolver of the one drive motor, or obtain a slip rate of the one wheel based on a motor rotational speed signal output by a resolver signal of the one drive motor and a wheel speed signal of the one wheel, and the motor control unit is configured to control, via a brake controller of the electric vehicle, the plurality of wheel end brake apparatuses to respectively brake the plurality of wheels.

In an actual electric vehicle, a motor control unit may control one drive motor to drive one wheel on one axle or control one drive motor to drive two wheels on one axle. When the one drive motor drives the one wheel on the one axle, the motor control unit can accurately calculate a slip rate of the one wheel directly based on a resolver signal. However, when the one drive motor drives the two wheels on the one axle , a slip rate of the wheel can be more accurately calculated based on a resolver signal of the drive motor and a wheel speed of the wheel. Therefore, the motor control unit may select, based on a driving manner of the wheel, a manner of calculating the slip rate of the wheel, to more accurately and quickly determine whether the wheel slips.

In the foregoing manner, when the one wheel of the electric vehicle slips, the motor control unit may calculate the slip rate of the wheel in different manners based on an architecture of the electric vehicle. The motor control unit may further directly indicate the brake controller to brake the wheel, and a braking force control signal is sent by the brake controller. In this way, the slipping of the wheel can be controlled more stably, and braking force of each wheel can be coordinated to ensure stable braking of the electric vehicle.

In an implementation, the motor control unit is further configured to: in a case in which the one wheel slips, when a slip rate of the one wheel at a second moment is greater than a slip rate at a first moment, control braking force output by the wheel end brake apparatus of the one wheel at the second moment to be greater than braking force output at the first moment.

Correspondingly, when the slip rate of the wheel becomes larger, the wheel slips more frequently, and the motor control unit indicates the brake controller to increase the braking force output by the wheel end brake apparatus, to more quickly control slipping.

In an implementation, the motor control unit is further configured to: in a case in which the one wheel slips, when a slip rate of the one wheel at a third moment is less than a slip rate at the second moment, control the drive motor corresponding to the one wheel to reduce output torque.

Greater wheel speed fluctuation of a wheel indicates more serious slipping jitter of the wheel. Therefore, the motor control unit can detect a wheel speed of the wheel, and increase the braking force output by the wheel end brake apparatus when the wheel speed of the wheel fluctuates greatly, to better suppress the slipping of the wheel.

In an implementation, the motor control unit is further configured to: in a case in which the one wheel slips, control the one wheel end brake apparatus corresponding to the wheel to brake the wheel, to reduce a rotational speed of the wheel to a preset rotational speed, where a difference between the preset rotational speed and a rotational speed of a wheel in the same row as the one wheel is less than a preset rotational speed difference.

Correspondingly, when controlling the wheel end brake apparatus to brake the wheel, the motor control unit performs control with consideration of a current rotational speed of the wheel in the same row, to prevent the electric vehicle from traveling unstably because a wheel speed of a braked wheel decreases excessively fast.

In an implementation, the one drive motor is further configured to drive two front wheels or two rear wheels of the electric vehicle, and the motor control unit is further configured to control the one drive motor to reduce output torque in response to slipping of the two front wheels or the two rear wheels.

In the foregoing manner, when the drive motor is configured to drive two wheels in a same row and the two wheels slip, the motor control unit may control the one drive motor to reduce the output torque, to reduce fluttering of the electric vehicle.

According to a second aspect, a powertrain is provided. The powertrain includes one drive motor and the motor control unit according to the first aspect. The powertrain is configured to drive two front wheels or two rear wheels of the electric vehicle.

In the foregoing manner, the motor control unit in the powertrain is integrated with the drive motor, and the motor control unit may directly sense a rotational speed of the drive motor via a resolver, to quickly control a corresponding wheel end brake apparatus to brake a slipping wheel.

According to a third aspect, this application provides an anti-slip control method for an electric vehicle. The anti-slip control method is used to control, when an electric vehicle slips, wheel end brake apparatuses and drive motors that correspond to four wheels of the electric vehicle. The anti-slip control method includes: in response to slipping of two of the wheels on a same side of the electric vehicle, controlling wheel end brake apparatuses corresponding to the two wheels on the same side to perform braking; in response to slipping of two of the wheels in a same row of the electric vehicle, controlling wheel end brake apparatuses corresponding to the two wheels in the same row to perform braking; or in response to slipping of two of the wheels at a same diagonal of the electric vehicle, controlling wheel end brake apparatuses corresponding to the two wheels at the same diagonal to perform braking.

Correspondingly, the electric vehicle is controlled by using the anti-slip control method during traveling of the electric vehicle, so that brake control can be separately performed on the slipping of the wheels on the same side of the electric vehicle, the slipping of the wheels in the same row of the electric vehicle, and the slipping of the wheels at the diagonal of the electric vehicle, to ensure traveling stability of the vehicle in a plurality of slipping cases.

In an implementation form of the anti-slip control method for an electric vehicle according to the third aspect, the anti-slip control method includes: in a case in which a slope of a road on which the electric vehicle travels is less than a preset slope value, when either of the front row of wheels and the rear row of wheels slip, controlling a drive motor corresponding to the row of slipping wheels to reduce output torque, and controlling output torque of a drive motor corresponding to the other row of wheels to remain unchanged; when either of the left side of wheels and the right side of wheels slip, controlling output torque of a drive motor corresponding to the side of slipping wheels to remain unchanged; when either of two pairs of the diagonal wheels slip, controlling the drive motors corresponding to the four wheels to reduce output torque; or when all the four wheels slip, controlling the drive motors corresponding to the four wheels to reduce output torque.

Correspondingly, according to the anti-slip control method for an electric vehicle, when the electric vehicle travels on a flat road, drive torque can be controlled in a timely manner based on slipping statuses of different wheels, and drive torque of another non-slipping wheel can be adjusted and controlled, so that the electric vehicle can quickly get out of slipping and safely travel in a plurality of slipping cases.

In another implementation form of the anti-slip control method for an electric vehicle according to the third aspect, the anti-slip control method further includes: in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a first preset rotational speed difference, controlling a decrease value of output torque of a drive motor corresponding to the right front wheel within third preset duration to be greater than a decrease value of output torque of a drive motor corresponding to the left rear wheel within the third preset duration.

Correspondingly, according to the anti-slip control method for an electric vehicle, when the electric vehicle tends to yawing because slipping affects stability of the electric vehicle when the electric vehicle travels on a flat road, the anti-slip control method can suppress a yawing trend of the electric vehicle in a timely manner by controlling corresponding torque.

In another implementation form of the anti-slip control method for an electric vehicle according to the third aspect, the anti-slip control method includes: in a case in which a slope of a road on which the electric vehicle travels is greater than a preset slope value and the electric vehicle travels uphill, when either of the front row of wheels and the rear row of wheels slip, controlling a drive motor corresponding to the row of slipping wheels to reduce output torque, and controlling a drive motor corresponding to the other row of wheels to increase output torque; when either of the left side of wheels and the right side of wheels slip, controlling output torque of a drive motor corresponding to the side of slipping wheels to remain unchanged; when either of two pairs of the diagonal wheels slip, controlling the drive motors corresponding to the four wheels to reduce output torque; or when all the four wheels slip, controlling the drive motors corresponding to the four wheels to reduce output torque.

Correspondingly, according to the anti-slip control method for an electric vehicle, when the electric vehicle travels uphill, drive torque can be controlled in a timely manner based on a slipping status of a wheel, and drive torque of another non-slipping wheel can be adjusted and controlled, so that the electric vehicle can quickly get out of slipping and safely travel in a plurality of uphill slipping cases.

In another implementation form of the anti-slip control method for an electric vehicle according to the third aspect, the anti-slip control method further includes:
in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a second preset rotational speed difference, controlling a decrease value of output torque of a drive motor corresponding to the right front wheel within third preset duration to be greater than a decrease value of output torque of a drive motor corresponding to the left rear wheel within the third preset duration, where the second preset rotational speed difference is greater than a first preset rotational speed difference.

Correspondingly, according to the anti-slip control method for an electric vehicle, when the electric vehicle tends to yawing because slipping affects stability of the electric vehicle when the electric vehicle travels uphill, the anti-slip control method can suppress, by using that yawing of the electric vehicle can be properly suppressed by gravity of the electric vehicle, a yawing trend of the electric vehicle in a timely manner by controlling corresponding torque.

In another implementation form of the anti-slip control method for an electric vehicle according to the third aspect, the anti-slip control method further includes: in a case in which a slope of a road on which the electric vehicle travels is greater than a preset slope value and the electric vehicle travels downhill, when either of the front row of wheels and the rear row of wheels slip, controlling a drive motor corresponding to the row of slipping wheels to reduce output torque, and controlling a drive motor corresponding to the other row of wheels to reduce output torque; when either of the left side of wheels and the right side of wheels slip, controlling output torque of a drive motor corresponding to the side of slipping wheels to remain unchanged; when either of two pairs of the diagonal wheels slip, controlling the drive motors corresponding to the four wheels to reduce output torque; or when all the four wheels slip, controlling the drive motors corresponding to the four wheels to reduce output torque.

Correspondingly, according to the anti-slip control method for an electric vehicle, when the electric vehicle travels downhill, drive torque can be controlled in a timely manner based on a slipping status of a wheel, and drive torque of another non-slipping wheel can be adjusted and controlled, so that the electric vehicle can quickly get out of slipping and safely travel in a plurality of downhill slipping cases.

In another implementation form of the anti-slip control method for an electric vehicle according to the third aspect, the anti-slip control method includes: in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a third preset rotational speed difference, controlling a decrease value of output torque of a drive motor corresponding to the right front wheel within third preset duration to be greater than a decrease value of output torque of a drive motor corresponding to the left rear wheel within the third preset duration, where the third preset rotational speed difference is less than a first preset rotational speed difference.

Correspondingly, according to the anti-slip control method for an electric vehicle, when the electric vehicle tends to yawing because slipping affects stability of the electric vehicle when the electric vehicle travels downhill, the anti-slip control method can suppress, by considering that yawing of the electric vehicle can be properly accelerated by gravity of the electric vehicle, a yawing trend of the electric vehicle in a timely manner by controlling corresponding torque.

In another implementation form of the anti-slip control method for an electric vehicle according to the third aspect, the anti-slip control method includes: in response to slipping of any wheel of the electric vehicle, controlling the drive motors corresponding to the four wheels not to respond, within fourth duration, to a torque output value signal indicated by an accelerator pedal of the electric vehicle.

Correspondingly, according to the anti-slip control method for an electric vehicle, the electric vehicle can perform adaptive adjustment without responding to a torque indication of the accelerator pedal when the vehicle slips, thereby enhancing safety and stability of anti-slip control and accelerating anti-slip control.

### BRIEF DESCRIPTION OF DRAWINGS

FIG. 1 is a diagram of a topology structure of an electric vehicle according to an embodiment of this application;
FIG. 2 is a diagram of a structure of a drive system according to an embodiment of this application;
FIG. 3 is a diagram of a structure of a brake system according to an embodiment of this application;
FIG. 4 is a diagram of a topology structure of an electric vehicle according to an embodiment of this application;
FIG. 5 is a diagram of another topology structure of an electric vehicle according to an embodiment of this application;
FIG. 6 is a diagram 1 of structures of a drive system and a brake system according to an embodiment of this application;
FIG. 7 is a diagram 2 of structures of a drive system and a brake system according to an embodiment of this application;
FIG. 8 is a diagram 3 of structures of a drive system and a brake system according to an embodiment of this application;
FIG. 9 is a diagram 4 of structures of a drive system and a brake system according to an embodiment of this application;
FIG. 10 is a diagram 5 of structures of a drive system and a brake system according to an embodiment of this application; and
FIG. 11 is a diagram 6 of structures of a drive system and a brake system according to an embodiment of this application.

### DESCRIPTION OF EMBODIMENTS

The following describes the technical solutions in embodiments of this application with reference to the accompanying drawings in embodiments of this application.

It should be noted that the word such as "in an embodiment" or "for example" in this application is used to represent giving an example, an illustration, or a description. Any embodiment or design scheme described as "in an embodiment" or "for example" in this application should not be explained as being more preferred or having more advantages than another embodiment or design scheme. Exactly, use of the word such as "in an embodiment" or "for example" is intended to present a related concept in a specific manner.

The following describes this application in detail with reference to the accompanying drawings and embodiments.

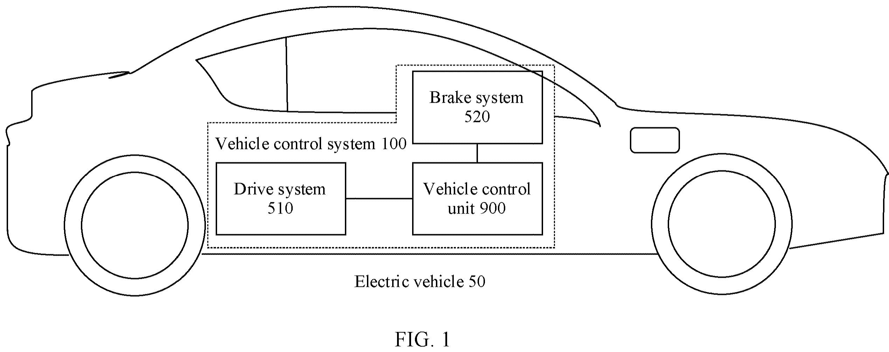

As shown in FIG. 1, an electric vehicle control system 100 of an electric vehicle 50 in the electric vehicle field includes a drive system 510, a brake system 520, and a vehicle control unit 900. The drive system 510 is configured to provide power for the electric vehicle 50 during traveling. The brake system 520 is configured to provide braking force for the electric vehicle 50 during braking.

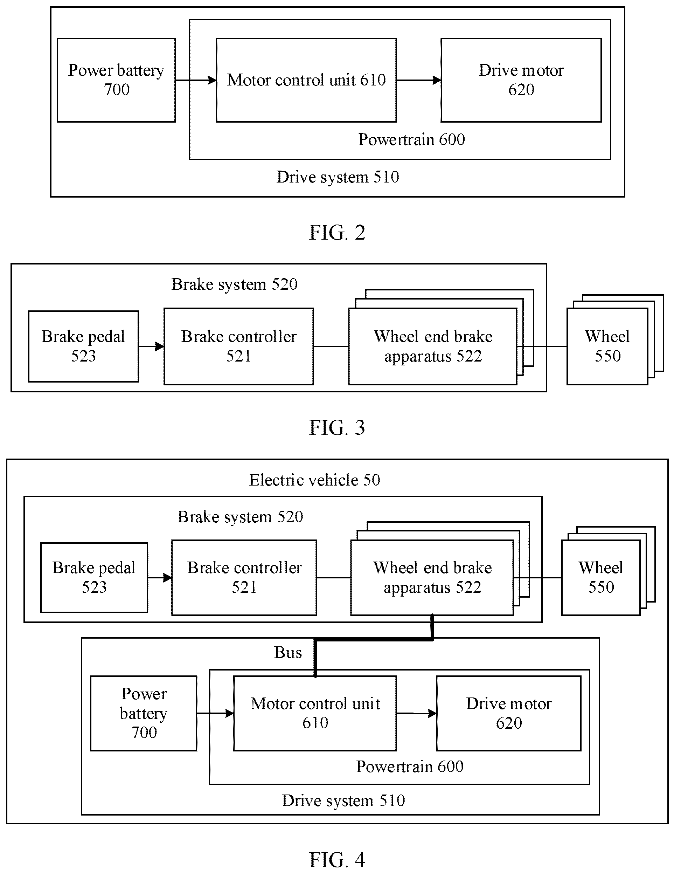

As shown in FIG. 2, the drive system 510 includes a powertrain 600 and a power battery 700. The power battery 700 is configured to supply power to the powertrain 600. The drive system 510 in the electric vehicle 50 usually includes a plurality of powertrains 600, and each powertrain 600 is powered by the power battery 700. To facilitate control on the powertrain 600, each powertrain 600 is further connected to the vehicle control unit 900 in the electric vehicle 50. The powertrain 600 may be monitored and controlled via the vehicle control unit 900. In addition, the vehicle control unit 900 may also monitor and control the brake system 520.

Still as shown in FIG. 2, the powertrain 600 includes a motor control unit (motor control unit, MCU) 610 and a drive motor 620. The motor control unit 610 is configured to convert a direct current of the power battery 700 into a three-phase alternating current, to drive the drive motor 620 to output required torque. Specifically, the vehicle control unit 900 may send a control signal to the motor control unit 610 in the powertrain 600. The motor control unit 610 may receive the control signal and control the drive motor 620 to output the required torque, to drive the electric vehicle to travel. The powertrain 600 further includes a resolver 230. The resolver 230 is mounted on one side of the drive motor 620. The resolver 230 is connected to the motor control unit 610. The motor control unit 610 is configured to receive a resolver signal output by the resolver 230, where the resolver signal indicates a rotational speed of the drive motor 620.

As shown in FIG. 3, the brake system 520 includes a brake controller 521, four wheel end brake apparatuses 522, and a brake pedal 523. Two wheel end brake apparatuses 522 are disposed on a front axle 410 of the electric vehicle 50, and the other two wheel end brake apparatuses 522 are disposed on a rear axle of the electric vehicle 50. Each wheel end brake apparatus 522 is configured to brake one wheel 550. The brake controller 521 is further connected to the brake pedal 523. The brake controller 521 may indicate, based on a stroke of the brake pedal 523, one or more wheel end brake apparatuses 522 to brake one or more wheels.

In the foregoing implementation process, the brake system 520 may be an electric hydraulic brake (electric hydraulic brake, EHB) system or an electric mechanical brake (electric mechanical brake, EMB) system. When the brake system 520 is an electric mechanical brake system, the wheel end brake apparatus 522 is an electric mechanical brake apparatus, and the motor control unit 610 may indicate the brake controller 521 to control the electric mechanical brake apparatus to output braking torque to brake a corresponding wheel. When the brake system 520 is an electric hydraulic brake system, the wheel end brake apparatus 522 is an electric hydraulic brake apparatus, and the motor control unit 610 may indicate the brake controller 521 to control the electric hydraulic brake apparatus to output hydraulic braking force to brake a corresponding wheel.

In an embodiment, a wheel speed sensor may be disposed on a wheel of the electric vehicle 50, and the wheel speed sensor may be connected to the brake controller 521. In a traveling process of the electric vehicle 50, the brake controller 521 may send a wheel speed detected by the wheel speed sensor to the vehicle control unit 900 through a chassis bus. The vehicle control unit 900 may determine, based on a result of comparison between the wheel speed of the wheel and a reference wheel speed, whether the wheel slips. When the wheel slips, the vehicle control unit 900 may send a torsion reduction instruction to the motor control unit 610 through a bus, to limit slipping of the wheel. In addition, the vehicle control unit 900 may further send a braking instruction to the brake controller 521, to brake the slipping wheel. However, in an execution process of the foregoing solution, signals need to be transmitted across different buses, and the vehicle control unit 900 needs to control the motor control unit 610, the brake controller 521, and other components. Consequently, a calculation amount is large, and a delay is generated. The wheel usually slips instantaneously. If the slipping of the wheel cannot be suppressed in a timely manner, the electric vehicle is prone to yawing. The slipping of the wheel is usually determined based on whether a slip rate of the wheel is greater than a preset slip rate value.

In an embodiment, when the resolver 230 is mounted on one side of the drive motor 620, the vehicle control unit 900 may further calculate the rotational speed of the drive motor based on the resolver signal of the drive motor 620, and then determine, based on a result of comparison between the rotational speed of the drive motor and a reference rotational speed, whether the wheel slips. When the wheel slips, the vehicle control unit 900 may send a torsion reduction instruction to the motor control unit 610 through a bus, to limit slipping of the wheel. In addition, the vehicle control unit 900 may further send a braking instruction to the brake controller 521, to brake the slipping wheel. However, in the foregoing solution, a long control path also causes a long delay of an entire control loop.

In some related technologies, to quickly detect and control slipping of a wheel, an anti-slip program may be directly installed on the motor control unit 610. The motor control unit 610 may detect, based on the rotational speed of the drive motor 620, whether the wheel slips. When the wheel slips, the motor control unit 610 may control the drive motor 620 to reduce output torque. However, in this solution, a non-slipping wheel cannot be used, and power provided by wheels of an entire axle is reduced. As a result, power of the entire vehicle is reduced, resulting in a reduced climbing capability of the electric vehicle.

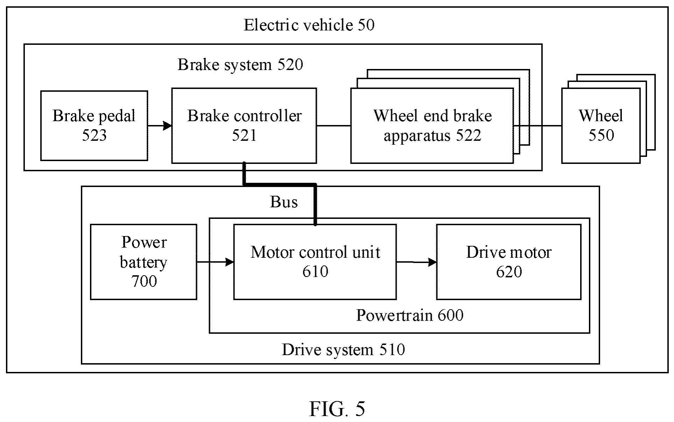

To resolve the foregoing problem, as shown in FIG. 4 and FIG. 5, in an embodiment, an embodiment of this application provides an electric vehicle 50. The electric vehicle 50 includes a drive system 510 and a brake system 520. The drive system 510 includes a powertrain 600 and a power battery 700. The power battery 700 is configured to supply power to the powertrain 600. The powertrain 600 includes a motor control unit 610 and a drive motor 620. The motor control unit 610 is configured to convert a direct current of the power battery 700 into a three-phase alternating current, to drive the drive motor 620 to output required torque. The brake system 520 includes a brake controller 521, four wheel end brake apparatuses 522, and a brake pedal 523. Two wheel end brake apparatuses 522 are disposed on a front axle of the electric vehicle 50, and the other two wheel end brake apparatuses 522 are disposed on a rear axle of the electric vehicle 50. Each wheel end brake apparatus 522 is configured to brake one wheel 550. The brake controller 521 is further connected to the brake pedal 523. The brake controller 521 may indicate, based on a stroke of the brake pedal 523, one or more wheel end brake apparatuses 522 to brake one or more wheels 550.

As shown in FIG. 4, the motor control unit 610 is configured to control one drive motor 620 to drive the electric vehicle 50 and configured to control a plurality of wheel end brake apparatuses 522 of the electric vehicle 50, and the plurality of wheel end brake apparatuses 522 are respectively configured to brake a plurality of wheels 550 of the electric vehicle 50. The motor control unit 610 is further configured to: in a process of controlling the one drive motor 620 to drive the electric vehicle, in response to slipping of one wheel in the plurality of wheels 550, control one wheel end brake apparatus corresponding to the one wheel to brake the one wheel.

When the one wheel of the electric vehicle slips, the motor control unit 610 may brake the wheel 550 via the wheel end brake apparatus 522, and the vehicle control unit does not need to participate in signal transfer. This reduces a slipping suppression delay, and can suppress the slipping of the wheel 550 more quickly.

Further, still as shown in FIG. 5, the motor control unit 610 obtains a slip rate of the one wheel in the wheels 550 through calculation based on a motor rotational speed signal output by a resolver of the one drive motor 620, or obtains a slip rate of the one wheel in the wheels 550 based on a motor rotational speed signal output by a resolver signal of the one drive motor 620 and a wheel speed signal of the one wheel in the wheels 550, and the motor control unit 610 and the brake controller 521 may be directly communicatively connected to each other through a bus. The bus may be a controller area network (controller area network, CAN) bus, for example, a chassis CAN bus of the electric vehicle 50. The motor control unit 610 may control one drive motor 620 of the electric vehicle 50 to output torque to drive one or two wheels of the electric vehicle 50, so as to drive the electric vehicle to travel. In addition, the motor control unit 610 may further indicate, in response to a slip rate of the one wheel driven by the one drive motor being greater than a preset slip rate, the brake controller 521 to control the wheel end brake apparatus of the one wheel to brake the one wheel.

In the foregoing implementation process, the wheel slips instantaneously, and braking one wheel for a long time may cause the electric vehicle to be unstable. Therefore, duration in which the motor control unit 510 indicates the brake controller 521 to control the wheel end brake apparatus of the one wheel to brake the one wheel is less than preset duration, and the preset duration may be determined based on measured experimental data.

In an implementation, the motor control unit 610 is further configured to: in a case in which the one wheel in the wheels 550 slips, when a slip rate of the one wheel in the wheels 550 at a second moment is greater than a slip rate at a first moment, control braking force output by the wheel end brake apparatus of the one wheel in the wheel 550 at the second moment to be greater than braking force output at the first moment. Correspondingly, when the slip rate of the wheel becomes larger, the wheel slips more frequently, and the motor control unit indicates the brake controller to increase the braking force output by the wheel end brake apparatus, to more quickly control slipping.

In an implementation, the motor control unit 610 is further configured to: in a case in which the one wheel in the wheels 550 slips, when a slip rate of the one wheel in the wheels 550 at a third moment is less than a slip rate at the second moment, control the drive motor corresponding to the one wheel in the wheels 550 to reduce output torque. Greater wheel speed fluctuation of a wheel indicates more serious slipping jitter of the wheel. Therefore, the motor control unit 610 can detect a wheel speed of the wheel, and increase the braking force output by the wheel end brake apparatus when the wheel speed of the wheel fluctuates greatly, to better suppress the slipping of the wheel.

In an implementation, the motor control unit 610 is further configured to: in a case in which the one wheel in the wheels 550 slips, control the one wheel end brake apparatus corresponding to the wheel to brake the wheel, to reduce a rotational speed of the wheel to a preset rotational speed, where a difference between the preset rotational speed and a rotational speed of a wheel in the same row as the one wheel is less than a preset rotational speed difference. Correspondingly, when controlling the wheel end brake apparatus to brake the wheel, the motor control unit performs control with consideration of a current rotational speed of the wheel in the same row, to prevent the electric vehicle from traveling unstably because a wheel speed of a braked wheel decreases excessively fast.

In an implementation, the one drive motor 620 is further configured to drive two front wheels or two rear wheels of the electric vehicle, and the motor control unit is further configured to control the one drive motor 620 to reduce output torque in response to slipping of the two front wheels or the two rear wheels.

In the foregoing manner, when the drive motor 620 is configured to drive two wheels in a same row and the two wheels slip, the motor control unit may control the one drive motor 620 to reduce the output torque, to reduce fluttering of the electric vehicle.

In an actual application scenario, because electric vehicles 50 are driven in different manners, to better understand the technical solutions provided in embodiments of this application, embodiments of this application provide the following several embodiments for example description.

### Embodiment 1

In an embodiment, when an electric vehicle 50 is a front-drive electric vehicle or a rear-drive electric vehicle, a powertrain of the electric vehicle 50 may include a first motor control unit MCU 1 and a first drive motor M1. Two wheels 550 of a front axle 530 or a rear axle 540 of the electric vehicle 50 may be driven by the first drive motor M1. When one wheel driven by the first drive motor M1 slips, a voltage value of a resolver signal of the first drive motor M1 increases. In this scenario, the first motor control unit MCU 1 calculates a slip rate based on the resolver signal, and can determine only that a wheel slips, but cannot determine which wheel slips. Therefore, in this embodiment, the first motor control unit MCU 1 may calculate the slip rate based on the resolver signal of the first drive motor M1 and a wheel speed signal of the wheel. The first motor control unit MCU 1 may calculate a difference between a wheel speed corresponding to the resolver signal and a vehicle speed corresponding to a wheel speed signal of each wheel, and then calculate the slip rate based on a ratio of the difference to the wheel speed corresponding to the resolver signal, or calculate the slip rate based on a ratio of the difference to the vehicle speed corresponding to the wheel speed signal of each wheel.

In an embodiment, if one wheel driven by the first drive motor M1 slips, that is, a slip rate of the wheel is greater than a preset slip rate, for example, 11%, the first motor control unit MCU 1 indicates a brake controller 521 to control, based on an expected preset rotational speed, a wheel end brake apparatus 522 of the one wheel to brake the one wheel, and control the first drive motor M1 to remain output torque unchanged. The preset rotational speed indicates a wheel speed at which the one wheel needs to be maintained after the one wheel is braked, and the preset rotational speed is a speed at which a difference between the preset rotational speed and a rotational speed of a wheel in the same row as the one wheel is less than a preset rotational speed difference, for example, 100 rpm.

In an embodiment, if two wheels driven by the first drive motor M1 slip, that is, both slip rates are greater than a preset slip rate 11%, the first motor control unit MCU 1 controls the first drive motor M1 to reduce output torque.

In an embodiment, if both slip rates of the two wheels driven by the first drive motor M1 are greater than a preset slip rate, the first motor control unit MCU 1 may alternatively selectively indicate a brake controller 521 to control wheel end brake apparatuses 522 of the two wheels to brake the two wheels.

In an actual traveling process of the electric vehicle 50, the preset slip rate is affected by a plurality of factors such as a load of the electric vehicle, an adhesion coefficient of a pavement, and a friction coefficient of a tire. Therefore, a value range of the preset slip rate may range from 0 to 15%. A specific value of the preset slip rate may be determined based on experimental data in various scenarios.

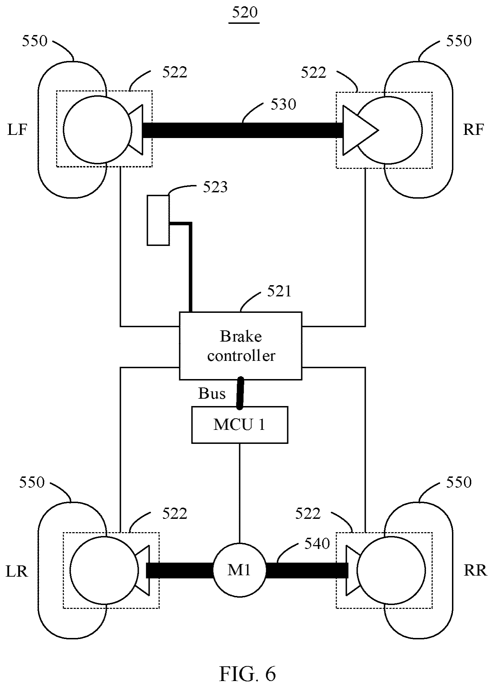

In an embodiment, as shown in FIG. 6, a left front wheel of the electric vehicle 50 may be denoted as LF, a left rear wheel may be denoted as LR, a right front wheel may be denoted as RF, and a right rear wheel may be denoted as RR. When the electric vehicle 50 is a rear-drive electric vehicle, a motor control unit 510 may control a drive motor 620 to drive the left rear wheel LR and the right rear wheel RR on the rear axle of the electric vehicle 50. If a slip rate of the left rear wheel LR is greater than a preset slip rate and a slip rate of the right rear wheel RR is less than the preset slip rate, the first motor control unit MCU 1 indicates the brake controller 521 to drive a wheel end brake apparatus 522 of the left rear wheel LR to brake the left rear wheel LR, and controls the first drive motor M1 to remain output torque unchanged. Similarly, if a slip rate of the right rear wheel RR of the electric vehicle 50 is greater than a preset slip rate and a slip rate of the left rear wheel LR is less than the preset slip rate, the first motor control unit MCU 1 indicates the brake controller 521 to drive a wheel end brake apparatus 522 of the right rear wheel RR to brake the right rear wheel RR, and controls the first drive motor M1 to remain output torque unchanged. If both the slip rate of the right rear wheel RR of the electric vehicle 50 and the slip rate of the left rear wheel LR are greater than the preset slip rate, the first motor control unit MCU 1 controls the first drive motor M1 to reduce output torque and send an output torque value signal to a vehicle control unit and the brake controller 521.

In the foregoing manner, when one wheel driven by the first drive motor M1 slips, the motor control unit 610 may directly indicate the brake controller 521 to control a wheel end brake apparatus of the one wheel to perform braking, to suppress the slipping. Based on this, the motor control unit 610 can directly control the brake controller 521, thereby reducing a slipping suppression delay, so as to suppress the slipping of the wheel more quickly.

It may be understood that, when the electric vehicle 50 is a front-drive electric vehicle, a wheel end brake apparatus and a drive motor that are of a slipping wheel may also be controlled in the foregoing manner. Details are not described herein in this embodiment of this application.

In an embodiment, if a slip rate of the left rear wheel LR is greater than a preset slip rate and a slip rate of the left rear wheel LR at a second moment t2 is greater than a slip rate at a first moment t1, where t2>t1, the first motor control unit MCU 1 may directly control or may indicate the brake controller 521 to control a wheel end brake apparatus of the left rear wheel LR to increase output braking force.

When the slip rate of the wheel becomes larger, the wheel slips more frequently, and the motor control unit may control or indicate the brake controller to increase braking force output by the wheel end brake apparatus, to more quickly control slipping.

In an embodiment, if a slip rate of the left rear wheel LR is greater than a preset slip rate, a slip rate of the right rear wheel RR is less than the preset slip rate, and a slip rate of the left rear wheel LR at a third moment t3 is less than a slip rate at a moment t2, where t3>t2, it indicates that slipping jitter of the left rear wheel LR is serious. In this case, the first motor control unit MCU 1 controls the first drive motor M1 to reduce output torque. Similarly, the right rear RR is controlled in the same way.

Based on this, the first motor control unit MCU 1 can suppress the slipping by reducing the output torque of the first drive motor M1 when the slipping jitter of the wheel is serious.

In an embodiment, when a yaw angle of the electric vehicle 50 exceeds a reference angle, the first motor control unit MCU 1 may further indicate an electric power steering motor to output steering intervention torque, to adjust a steering angle of the electric vehicle 50, so as to limit the yaw angle of the electric vehicle, so that the electric vehicle travels more smoothly.

In an embodiment, when the electric vehicle 50 turns, if one wheel driven by the first drive motor M1 slips, braking force output by a wheel end brake apparatus of the slipping wheel may be adjusted based on a turning angle of the electric vehicle 50 and a yawing angular velocity of the electric vehicle, to ensure that both power and a yawing amplitude of the electric vehicle meet requirements.

### Embodiment 2

In an embodiment, when an electric vehicle 50 is a front-drive electric vehicle or a rear-drive electric vehicle, a powertrain of the electric vehicle 50 may also include a first drive motor M1, a second drive motor M2, a first motor control unit MCU 1, and a second motor control unit MCU 2. The first motor control unit MCU 1 is configured to control the first drive motor M1 to drive a first wheel on one axle, and the second motor control unit MCU 2 is configured to control the second drive motor M2 to drive a second wheel on the same axle. In this scenario, the first motor control unit MCU 1 may calculate a slip rate of the first wheel based on a resolver signal of the first drive motor M1, and the second motor control unit MCU 2 may calculate a slip rate of the second wheel based on a resolver signal of the second drive motor M2.

In an embodiment, if the slip rate of the first wheel is greater than a preset slip rate and the slip rate of the second wheel is less than the preset slip rate, the first motor control unit MCU 1 indicates a brake controller 521 to control, based on an expected preset rotational speed, a wheel end brake apparatus 522 of the first wheel to brake the first wheel, and the second motor control unit MCU 2 controls the second drive motor M2 to remain output torque unchanged.

A value range of the preset slip rate may range from 0 to 15%. A specific value of the preset slip rate may be determined based on experimental data in various scenarios.

In an embodiment, if the slip rate of the second wheel is greater than a preset slip rate and the slip rate of the first wheel is less than the preset slip rate, the second motor control unit MCU 2 indicates a brake controller 521 to control, based on an expected preset rotational speed, a wheel end brake apparatus 522 of the second wheel to brake the second wheel, and the first motor control unit MCU 1 controls the first drive motor M1 to remain output torque unchanged.

In an embodiment, if both the slip rate of the first wheel and the slip rate of the second wheel are greater than a preset slip rate, the first motor control unit MCU 1 controls the first drive motor M1 to reduce output torque, and the second motor control unit MCU 2 controls the second drive motor M2 to reduce output torque.

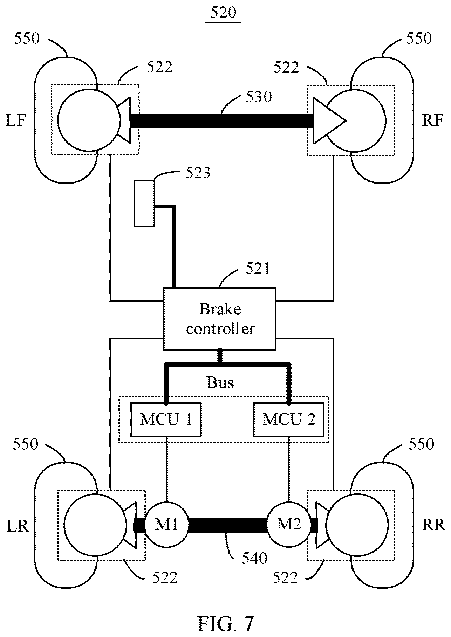

In an embodiment, as shown in FIG. 7, a left front wheel of the electric vehicle 50 may be denoted as LF, a left rear wheel may be denoted as LR, a right front wheel may be denoted as RF, and a right rear wheel may be denoted as RR. When the electric vehicle 50 is a rear-drive electric vehicle, the first wheel is the left rear wheel LR, and the second wheel is the right rear wheel RR. The first motor control unit MCU 1 controls the first drive motor M1 to drive the left rear wheel LR on a rear axle of the electric vehicle 50, and the second motor control unit MCU 2 controls the second drive motor M2 to drive the right rear wheel RR on the rear axle of the electric vehicle 50.

In an embodiment, if a slip rate of the left rear wheel LR is greater than a preset slip rate and a slip rate of the right rear wheel RR is less than the preset slip rate, the first motor control unit MCU 1 indicates a brake controller 521 to control, based on a preset rotational speed, a wheel end brake apparatus 522 of the left rear wheel LR to brake the left rear wheel LR, and the second motor control unit MCU 2 controls the second drive motor M2 to remain output torque unchanged. If a slip rate of the right rear wheel RR of the electric vehicle 50 is greater than a preset slip rate and a slip rate of the left rear wheel LR is less than the preset slip rate, the second motor control unit MCU 2 indicates a brake controller 521 to control, based on an expected wheel speed, a wheel end brake apparatus 522 of the right rear wheel RR to brake the right rear wheel RR, and the first motor control unit MCU 1 controls the first drive motor M1 to remain output torque unchanged.

In an embodiment, if both a slip rate of the left rear wheel LR and a slip rate of the right rear wheel RR are greater than a preset slip rate, the first motor control unit MCU 1 controls the first drive motor M1 to reduce output torque, and the second motor control unit MCU 2 controls the second drive motor M2 to reduce output torque.

In an embodiment, if a slip rate of the left rear wheel LR is greater than a preset slip rate, a slip rate of the right rear wheel RR is less than the preset slip rate, and a slip rate of the left rear wheel LR at a second moment t2 is greater than a slip rate at a first moment t1, where t2>t1, the first motor control unit MCU 1 indicates a brake controller 521 to control the wheel end brake apparatus of the left rear wheel LR to increase output braking force.

In an embodiment, if a slip rate of the left rear wheel LR is greater than a preset slip rate, a slip rate of the right rear wheel RR is less than the preset slip rate, and a slip rate of the left rear wheel LR at a third moment t3 is less than a slip rate at a moment t2, where t3>t2, it indicates that slipping jitter of the left rear wheel LR is serious. The first motor control unit MCU 1 controls the first drive motor M1 to reduce output torque, and the second motor control unit MCU 2 controls the second drive motor M2 to remain output torque unchanged.

In an embodiment, when a yaw angle of the electric vehicle 50 exceeds a reference angle, the first motor control unit MCU 1 or the second motor control unit MCU 2 may further indicate an electric power steering motor to output steering intervention torque, to adjust a steering angle of the electric vehicle 50, so as to limit the yaw angle of the electric vehicle 50, so that the electric vehicle travels more smoothly.

In an embodiment, braking force output by a wheel end brake apparatus corresponding to a wheel that needs to be braked in a turning process of the electric vehicle 50 may be adjusted based on a turning angle of the electric vehicle 50 and a yaw angular velocity of the electric vehicle, to ensure that both power and a yaw amplitude of the electric vehicle meet requirements.

### Embodiment 3

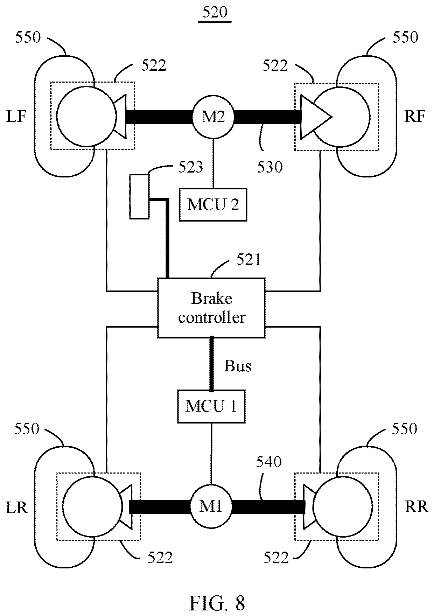

In an embodiment, as shown in FIG. 8, a powertrain of an electric vehicle 50 may include a first drive motor M1, a second drive motor M2, a first motor control unit MCU 1, and a second motor control unit MCU 2. A left front wheel of the electric vehicle 50 may be denoted as LF, a left rear wheel may be denoted as LR, a right front wheel may be denoted as RF, and a right rear wheel may be denoted as RR. The left rear wheel LR is a first wheel, the right rear wheel RR is a coaxial wheel of the first wheel, the left front wheel LF is a second wheel, and the right front wheel RF is a coaxial wheel of the second wheel. The first motor control unit MCU 1 controls the first drive motor M1 to drive the left rear wheel LR and the right rear wheel RR of a rear axle 540. The second motor control unit MCU 2 controls the second drive motor M2 to drive the left front wheel LF and the right front wheel RF of a front axle 530. In this scenario, the first motor control unit MCU 1 and the second motor control unit MCU 2 may calculate a slip rate of each wheel with reference to the manner described in Embodiment 1.

In an embodiment, if a slip rate of the left rear wheel LR is greater than a preset slip rate and a slip rate of the right rear wheel RR is less than the preset slip rate, the first motor control unit MCU 1 indicates a wheel end brake apparatus of the left rear wheel LR to perform braking, and controls the first drive motor M1 to remain output torque unchanged. If a slip rate of the right rear wheel RR is greater than a preset slip rate and a slip rate of the left rear wheel LR is less than the preset slip rate, the first motor control unit MCU 1 indicates a wheel end brake apparatus of the right rear wheel RR to perform braking, and controls the first drive motor M1 to remain output torque unchanged. If both a slip rate of the left rear wheel LR and a slip rate of the right rear wheel RR are greater than a preset slip rate, the first motor control unit MCU 1 controls the first drive motor M1 to reduce output torque and send an output torque value signal to a vehicle control unit and a brake controller 521 of the electric vehicle.

A value range of the preset slip rate may range from 0 to 15%. A specific value of the preset slip rate may be determined based on experimental data in various scenarios.

In an embodiment, if a slip rate of the left front wheel LF is greater than a preset slip rate and a slip rate of the right front wheel RF is less than the preset slip rate, the second motor control unit MCU 2 indicates a wheel end brake apparatus of the left front wheel LF to perform braking, and controls the second drive motor M2 to remain output torque unchanged. If a slip rate of the right front wheel RF is greater than a preset slip rate and a slip rate of the left front wheel LF is less than the preset slip rate, the second motor control unit MCU 2 indicates a wheel end brake apparatus of the right front wheel RF to perform braking, and controls the second drive motor M2 to remain output torque unchanged. If both a slip rate of the left front wheel LF and a slip rate of the right front wheel RF are greater than a preset slip rate, the second motor control unit MCU 2 controls the second drive motor M2 to reduce output torque and send an output torque value signal to a vehicle control unit and a brake controller 521 of the electric vehicle 50.

In an embodiment, in response to a rotational speed difference between the first drive motor M1 and the second drive motor M2 being greater than a preset rotational speed difference, the first motor control unit MCU 1 indicates a brake controller 521 to control a wheel end brake apparatus of the left rear wheel LR and a wheel end brake apparatus of the right rear wheel RR to respectively brake the left rear wheel LR and the right rear wheel RR, and the second motor control unit MCU 2 indicates the brake controller 521 to control a wheel end brake apparatus of the left front wheel LF and a wheel end brake apparatus of the right front wheel RF to respectively brake the left front wheel LF and the right front wheel RF. Based on this, when the rotational speed difference between the drive motors on the two axles of the electric vehicle 50 is excessively large, the brake controller 521 may prevent the electric vehicle from yawing through pre-brake.

In an embodiment, when a yaw angle of the electric vehicle 50 exceeds a reference angle, the first motor control unit MCU 1 or the second motor control unit MCU 2 may further indicate an electric power steering motor to output steering intervention torque, to adjust a steering angle of the electric vehicle 50, so as to limit the yaw angle of the electric vehicle, so that the electric vehicle travels more smoothly.

In an embodiment, braking force output by a wheel end brake apparatus corresponding to a wheel that needs to be braked in a turning process of the electric vehicle 50 may be adjusted based on a turning angle of the electric vehicle 50 and a yaw angular velocity of the electric vehicle, to ensure that both power and a yaw amplitude of the electric vehicle meet requirements.

### Embodiment 4

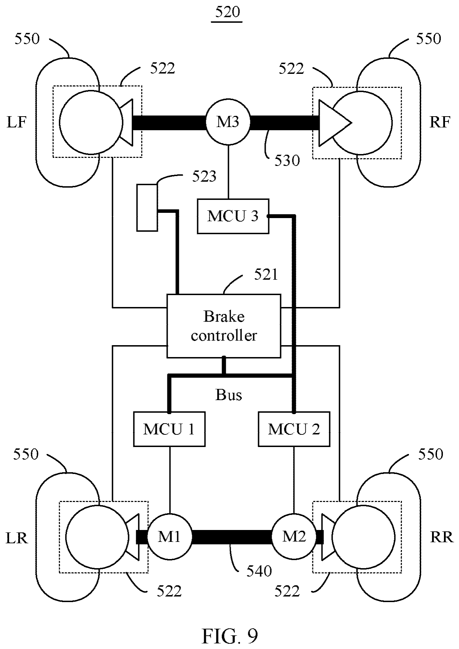

In an embodiment, as shown in FIG. 9, a powertrain of an electric vehicle 50 may include a first drive motor M1, a second drive motor M2, a first motor control unit MCU 1, a second motor control unit MCU 2, a third drive motor M3, and a third motor control unit MCU 3. The first motor control unit MCU 1 controls the first drive motor M1 to drive a left rear wheel LR on a rear axle of the electric vehicle 50, the second motor control unit MCU 2 controls the second drive motor M2 to drive a right rear wheel RR on the rear axle of the electric vehicle 50, and the third motor control unit MCU 3 controls the third drive motor M3 to drive a left front wheel LF and a right front wheel RF on a front axle of the electric vehicle 50.

In this scenario, the first motor control unit MCU 1 may calculate a slip rate based on a resolver signal of the first drive motor M1. The second motor control unit MCU 2 may calculate a slip rate based on a resolver signal of the second drive motor M2. The third motor control unit MCU 3 needs to calculate slip rates of the two corresponding wheels with reference to the manner described in Embodiment 1.

In an embodiment, the first motor control unit MCU 1 and the second motor control unit MCU 2 may indicate, with reference to the manner in Embodiment 2, a brake controller 521 to control corresponding wheel end brake apparatuses to brake the left rear wheel LR and the right rear wheel RR. Details are not described herein in this embodiment of this application. The first motor control unit MCU 1 and the second motor control unit MCU 2 may also control the first drive motor M1 and the second drive motor M2 with reference to the manner in Embodiment 2. Details are not described herein in this embodiment of this application.

### Embodiment 5

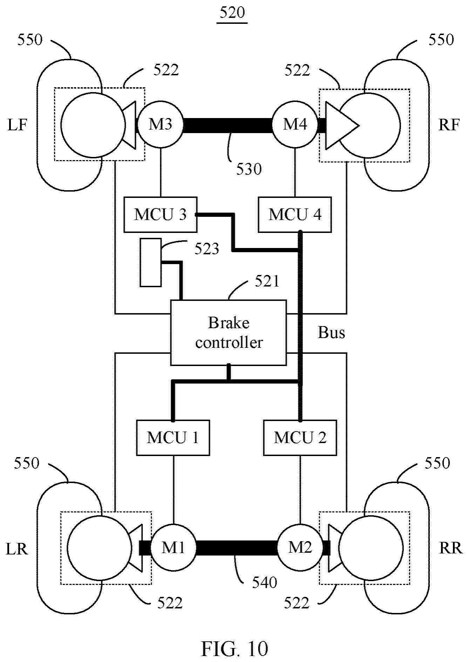

In an embodiment, as shown in FIG. 10, a powertrain of an electric vehicle 50 may include a first drive motor M1, a second drive motor M2, a first motor control unit MCU 1, a second motor control unit MCU 2, a third drive motor M3, a third motor control unit MCU 3, a fourth drive motor M4, and a fourth motor control unit MCU 4. The first motor control unit MCU 1 controls the first drive motor M1 to drive a left rear wheel LR on a rear axle of the electric vehicle 50, the second motor control unit MCU 2 controls the second drive motor M2 to drive a right rear wheel RR on the rear axle of the electric vehicle 50, the third motor control unit MCU 3 controls the third drive motor M3 to drive a left front wheel LF on a front axle of the electric vehicle 50, and the fourth motor control unit MCU 4 controls the fourth drive motor M4 to drive a right front wheel RF on the front axle of the electric vehicle 50. In this scenario, each of the four motor control units may calculate a slip rate of a corresponding wheel based on a resolver signal of a corresponding drive motor.

In an embodiment, if the slip rate of one wheel of the electric vehicle 50 is greater than a preset slip rate and the slip rates of the other three wheels are less than the preset slip rate, the motor control unit corresponding to the one wheel indicates a brake controller 521 to control a corresponding wheel end brake apparatus to brake the one wheel, and the four motor control units control the four drive motors to remain output torque unchanged. A value range of the preset slip rate may be 0 to 10%. A specific value of the preset slip rate may be determined based on experimental data in various scenarios.

For example, if a slip rate of the left front wheel LF is greater than a preset slip rate, and a slip rate of the left rear wheel RR, a slip rate of the right front wheel RF, and a slip rate of the right rear wheel RR are all less than the preset slip rate, the third motor control unit MCU 3 indicates the brake controller 521 to control a wheel end brake apparatus of the left front wheel LF to brake the left front wheel LF, the first motor control unit MCU 1 controls the first drive motor M1 to remain the output torque unchanged, the second motor control unit MCU 2 controls the second drive motor M2 to remain the output torque unchanged, the third motor control unit MCU 3 controls the third drive motor M3 to remain the output torque unchanged, and the fourth motor control unit MCU 4 controls the first drive motor M4 to remain the output torque unchanged.

In an embodiment, if slip rates of the two wheels on the right side or the left side of the electric vehicle 50 are greater than a preset slip rate, and slip rates of the two wheels on the other side of the electric vehicle are less than the preset slip rate, motor control units corresponding to two wheels whose slip rates are greater than the preset slip rate indicate a brake controller 521 to control two corresponding wheel end brake apparatuses to brake the two corresponding wheels, and the four motor control units control the four drive motors to remain output torque unchanged.

For example, if both a slip rate of the left front wheel LF and a slip rate of the left rear wheel LR are greater than a preset slip rate, and both a slip rate of the right front wheel RF and a slip rate of the right rear wheel RR are less than the preset slip rate, the third motor control unit MCU 3 indicates the brake controller 521 to control a wheel end brake apparatus of the left front wheel LF to brake the left front wheel LF, the first motor control unit MCU 1 indicates the brake controller 521 to control the wheel end brake apparatus of the left rear wheel LR to brake the left rear wheel LR, the first motor control unit MCU 1 controls the first drive motor M1 to remain the output torque unchanged, the second motor control unit MCU 2 controls the second drive motor M2 to remain the output torque unchanged, the third motor control unit MCU 3 controls the third drive motor M3 to remain the output torque unchanged, and the fourth motor control unit MCU 4 controls the first drive motor M4 to remain the output torque unchanged.

In an embodiment, in response to both the slip rate of the left front wheel LF and the slip rate of the right front wheel RF being greater than a preset slip rate, the third motor control unit MCU 3 controls the third drive motor M3 to reduce output torque, and the fourth motor control unit MCU 4 controls the fourth drive motor M4 to reduce output torque. In addition, the third motor control unit MCU 3 and the fourth motor control unit MCU 4 may further send output torque value signals to a vehicle control unit and a brake controller 521 of the electric vehicle.

In an embodiment, in response to both the slip rate of the left rear wheel LR and the slip rate of the right rear wheel RR being greater than a preset slip rate, the first motor control unit MCU 1 controls the first drive motor M1 to reduce output torque, and the second motor control unit MCU 2 controls the second drive motor M2 to reduce output torque. In addition, the first motor control unit MCU 1 and the second motor control unit MCU 2 may further send output torque value signals to a vehicle control unit and a brake controller 521 of the electric vehicle.

In an embodiment, when a rotational speed difference between two drive motors at any diagonal of the electric vehicle 50 is greater than another preset rotational speed difference, motor control units corresponding to the two drive motors at the any diagonal indicate a brake controller 521 to control wheel end brake apparatuses of two wheels driven by the two drive motors at the any diagonal to respectively brake the two wheels driven by the two drive motors at the any diagonal.

For example, when a rotational speed difference between the first drive motor M1 and the fourth drive motor M4 that correspond to the left rear wheel LR and the right front wheel RF is greater than another preset rotational speed difference, the first motor control unit MCU 1 indicates the brake controller 521 to control the corresponding wheel end brake apparatus to brake the left rear wheel FR, and the fourth motor control unit MCU 4 indicates the brake controller 521 to control the corresponding wheel end brake apparatus to brake the right front wheel RF.

In an embodiment, a value of braking force output by each wheel end brake apparatus 522 may be adjusted based on a gear of the electric vehicle, a stroke of an accelerator pedal, and the like.

In an embodiment, the first motor control unit MCU 1, the second motor control unit MCU 2, the third motor control unit MCU 3, and the fourth motor control unit MCU 4 are communicatively connected through an internal bus. When a yaw angle of the electric vehicle 50 exceeds a reference angle, the first motor control unit MCU 1, the second motor control unit MCU 2, the third motor control unit MCU 3, or the fourth motor control unit MCU 4 may further indicate an electric power steering motor to output steering intervention torque, to adjust a steering angle of the electric vehicle 50, so as to limit the yaw angle of the electric vehicle, so that the electric vehicle travels more smoothly.

In an embodiment, braking force output by a wheel end brake apparatus corresponding to a wheel that needs to be braked in a turning process of the electric vehicle 50 may be adjusted based on a turning angle of the electric vehicle 50 and a yaw angular velocity of the electric vehicle, to ensure that both power and a yaw amplitude of the electric vehicle meet requirements.

This application provides an embodiment of an anti-slip control method for an electric vehicle. FIG. 8 is used as an example. The anti-slip control method is used to control four wheels 550 of an electric vehicle 50 when the electric vehicle 50 slips, and the wheel 550 includes wheel end brake apparatuses 522 corresponding to a left front wheel LF, a right front wheel RF, a left rear wheel LR, and a right rear wheel RR, and drive motors M1 and M2. The anti-slip control method includes: in response to slipping of two wheels, for example, the left front wheel LF and the right front wheel RF or the left rear wheel LR and the right rear wheel RR on a same side of the electric vehicle, controlling wheel end brake apparatuses 522 corresponding to the two wheels on the same side to perform braking; in response to slipping of two wheels, for example, the left front wheel LF and the right front wheel RF in a same row of the electric vehicle 50, controlling wheel end brake apparatuses 522 corresponding to the two wheels in the same row to perform braking; or in response to slipping of two wheels, for example, the left front wheel LF and the right rear wheel RR at a same diagonal of the electric vehicle, controlling wheel end brake apparatuses 522 corresponding to the two wheels at the same diagonal to perform braking.

Correspondingly, the electric vehicle is controlled by using the anti-slip control method during traveling of the electric vehicle 50, so that brake control can be separately performed on the slipping of the wheels on the same side of the electric vehicle 50, the slipping of the wheels in the same row of the electric vehicle 50, and the slipping of the wheels at the diagonal of the electric vehicle 50, to ensure traveling stability of the vehicle in a plurality of slipping cases and improve traveling safety of the electric vehicle 50.

In an implementation form of the anti-slip control method for an electric vehicle 50, FIG. 8 is used as an example. The anti-slip control method includes: in a case in which a slope of a road on which the electric vehicle 50 travels is less than a preset slope value, for example, 5%, when the left front wheel LF and the right front wheel RF in a front row slip, controlling the drive motor M2 corresponding to the row of slipping wheels, namely, the left front wheel LF and the right front wheel RF in the front row to reduce output torque, and controlling output torque of the drive motor M1 corresponding to the other row of wheels, namely, the left rear wheel LR and the right rear wheel RR to remain unchanged; when a left side of wheels, namely, the left front wheel LF and the left rear wheel LR slip, controlling output torque of the drive motor corresponding to the side of slipping wheels, namely, the left front wheel LF and the left rear wheel LR to remain unchanged; when diagonal wheels, for example, the left front wheel LF and the right rear wheel RR slip, controlling the drive motors M1 and M2 corresponding to the four wheels to reduce output torque; or when all the four wheels, namely, the left front wheel LF, the right front wheel RF, the left rear wheel LR, and the right rear wheel RR slip, controlling the drive motors M1 and M2 corresponding to the four wheels to reduce output torque.

Corresponding torque control performed when other wheels in a same row, wheels on a same side, and diagonal wheels slip may also be obtained based on same control. Details are not described herein again.

Correspondingly, according to the anti-slip control method for an electric vehicle 50, when the electric vehicle 50 travels on a flat road, drive torque can be controlled in a timely manner based on slipping statuses of different wheels, and drive torque of another non-slipping wheel can be adjusted and controlled. The electric vehicle 50 controls the drive motor corresponding to the row of slipping wheels to reduce the output torque, and controls the output torque of the drive motor corresponding to the other row of wheels to remain unchanged, so that driving performance of the electric vehicle can be ensured while slipping of the same row is suppressed; the electric vehicle 50 controls the output torque of the drive motor corresponding to the side of slipping wheels to remain unchanged, so that turning yawing of the electric vehicle can be effectively controlled; and when the diagonal wheels slip, the electric vehicle 50 controls the drive motors corresponding to the four wheels to reduce the output torque, and when all the four wheels slip, the electric vehicle 50 controls the drive motors corresponding to the four wheels to reduce the output torque, so that traveling safety of the electric vehicle 50 during slipping is ensured. According to the anti-slip control method, in a plurality of flat-road slipping cases, the electric vehicle can quickly get out of slipping and safely travel based on actual torque control.

In another implementation form of the anti-slip control method for an electric vehicle 50, FIG. 8 is used as an example. The anti-slip control method further includes: in a case in which the left front wheel LF and the right rear wheel RR slip and the right front wheel RF and the left rear wheel LR do not slip, when a rotational speed of the right front wheel RF is greater than a rotational speed of the left rear wheel LR and a difference between the rotational speed of the right front wheel RF and the rotational speed of the left rear wheel LR is greater than a first preset rotational speed difference, for example, 80 rpm, controlling a decrease value of output torque of the drive motor M2 corresponding to the right front wheel RF within third preset duration, for example, 0.3s, to be greater than a decrease value of output torque of the drive motor M2 corresponding to the left rear wheel LR within the third preset duration.

Corresponding torque control performed when the other pair of diagonal wheels slip may also be obtained based on same control. Details are not described herein again.

Correspondingly, according to the anti-slip control method for an electric vehicle 50, when the electric vehicle tends to turning yawing because stability of the electric vehicle is affected by slipping of diagonal wheels and a rotational speed difference of non-slipping diagonal wheels exceeding a preset limit when the electric vehicle 50 travels on a flat road, the anti-slip control method can reversely suppress a yawing trend of the electric vehicle in a timely manner by controlling torque of the non-slipping wheels to reduce speed torque.

In another implementation form of the anti-slip control method for an electric vehicle according to the third aspect, FIG. 8 is used as an example. The anti-slip control method includes: in a case in which a slope of a road on which the electric vehicle travels is greater than a preset slope value, for example, 5% and the electric vehicle 50 travels uphill, when a front row of wheels, namely, the left front wheel LF and the right front wheel RF slip, controlling the drive motor M2 corresponding to the front row of slipping wheels, namely, the left front wheel LF and the right front wheel RF to reduce output torque, and controlling the drive motor M1 corresponding to the other row of wheels, namely, the left rear wheel LR and the right rear wheel RR to increase output torque; when a left side of wheels, namely, the left front wheel LF and the left rear wheel LR slip, controlling output torque of the drive motor corresponding to the side of slipping wheels, namely, the left front wheel LF and the left rear wheel LR to remain unchanged; when diagonal wheels, for example, the left front wheel LF and the right rear wheel RR slip, controlling the drive motors M1 and M2 corresponding to the four wheels to reduce output torque; or when all the four wheels, namely, the left front wheel LF, the right front wheel RF, the left rear wheel LR, and the right rear wheel RR slip, controlling the drive motors M1 and M2 corresponding to the four wheels to reduce output torque.

Corresponding torque control performed when other wheels in a same row, wheels on a same side, and diagonal wheels slip may also be obtained based on same control. Details are not described herein again.

Correspondingly, according to the anti-slip control method for an electric vehicle 50, when the electric vehicle 50 travels uphill, drive torque can be controlled in a timely manner based on slipping statuses of different wheels, and drive torque of another non-slipping wheel can be adjusted and controlled. The electric vehicle 50 controls the drive motor corresponding to the row of slipping wheels to reduce the output torque, and controls the drive motor corresponding to the other row of wheels to increase the output torque, so that driving performance of the electric vehicle 50 on a ramp can be ensured while slipping of the same row is suppressed; the electric vehicle 50 controls the output torque of the drive motor corresponding to the side of slipping wheels to remain unchanged, so that turning yawing of the electric vehicle can be effectively controlled; and when the diagonal wheels slip, the electric vehicle 50 controls the drive motors corresponding to the four wheels to reduce the output torque, and when all the four wheels slip, the electric vehicle 50 controls the drive motors corresponding to the four wheels to reduce the output torque, so that traveling safety of the electric vehicle 50 during slipping is ensured. According to the anti-slip control method, in a plurality of uphill slipping cases, the electric vehicle can quickly get out of slipping and safely travel based on actual torque control.

In another implementation form of the anti-slip control method for an electric vehicle according to the third aspect, FIG. 8 is used as an example. The anti-slip control method further includes: in a case in which the left front wheel LF and the right rear wheel RR slip and the right front wheel RF and the left rear wheel LR do not slip, when a rotational speed of the right front wheel RF is greater than a rotational speed of the left rear wheel LR and a difference between the rotational speed of the right front wheel RF and the rotational speed of the left rear wheel LR is greater than a second preset rotational speed difference, for example, 100 rpm, controlling a decrease value of output torque of the drive motor M2 corresponding to the right front wheel RF within third preset duration, for example, 0.3s, to be greater than a decrease value of output torque of the drive motor M2 corresponding to the left rear wheel LR within the third preset duration, where the second preset rotational speed difference during uphill traveling is greater than a first preset rotational speed difference during flat road traveling.

Corresponding torque control performed when the other pair of diagonal wheels slip may also be obtained based on same control. Details are not described herein again.

Correspondingly, according to the anti-slip control method for an electric vehicle 50, when the electric vehicle tends to turning yawing because stability of the electric vehicle is affected by slipping diagonal wheels and a rotational speed difference of non-slipping diagonal wheels exceeding a preset limit when the electric vehicle 50 travels uphill, the anti-slip control method can reversely suppress, by using impact of gravity of the electric vehicle, a yawing trend of the electric vehicle in a timely manner by controlling torque of the non-slipping wheels to reduce speed torque.

In another implementation form of the anti-slip control method for an electric vehicle according to the third aspect, FIG. 8 is used as an example. The anti-slip control method further includes: in a case in which a slope of a road on which the electric vehicle 50 travels is greater than a preset slope value, for example, 5% and the electric vehicle travels downhill, when a front row of wheels, namely, the left front wheel LF and the right front wheel RF slip, controlling the drive motor M2 corresponding to the front row of slipping wheels, namely, the left front wheel LF and the right front wheel RF to reduce output torque, and controlling the drive motor M1 corresponding to the other row of wheels, namely, the left rear wheel LR and the right rear wheel RR to reduce output torque; when a left side of wheels, namely, the left front wheel LF and the left rear wheel LR slip, controlling output torque of the drive motor corresponding to the side of slipping wheels, namely, the left front wheel LF and the left rear wheel LR to remain unchanged; when diagonal wheels, for example, the left front wheel LF and the right rear wheel RR slip, controlling the drive motors M1 and M2 corresponding to the four wheels to reduce output torque; or when all the four wheels, namely, the left front wheel LF, the right front wheel RF, the left rear wheel LR, and the right rear wheel RR slip, controlling the drive motors M1 and M2 corresponding to the four wheels to reduce output torque.

Corresponding torque control performed when other wheels in a same row, wheels on a same side, and diagonal wheels slip may also be obtained based on same control. Details are not described herein again.

Correspondingly, according to the anti-slip control method for an electric vehicle 50, when the electric vehicle 50 travels downhill, drive torque can be controlled in a timely manner based on slipping statuses of different wheels, and drive torque of another non-slipping wheel can be adjusted and controlled. The electric vehicle 50 controls the drive motor corresponding to the row of slipping wheels to reduce the output torque, and controls the drive motor corresponding to the other row of wheels to reduce the output torque, so that driving performance of the electric vehicle 50 during downhill traveling can be reduced while slipping of the same row is suppressed; the electric vehicle 50 controls the output torque of the drive motor corresponding to the side of slipping wheels to remain unchanged, so that turning yawing of the electric vehicle can be effectively controlled; and when the diagonal wheels slip, the electric vehicle 50 controls the drive motors corresponding to the four wheels to reduce the output torque, and when all the four wheels slip, the electric vehicle 50 controls the drive motors corresponding to the four wheels to reduce the output torque, so that traveling safety of the electric vehicle 50 during slipping is ensured. According to the anti-slip control method, in a plurality of downhill slipping cases, the electric vehicle can quickly get out of slipping and safely travel based on actual torque control.

In another implementation form of the anti-slip control method for an electric vehicle according to the third aspect, FIG. 8 is used as an example. The anti-slip control method further includes: in a case in which the left front wheel LF and the right rear wheel RR slip and the right front wheel RF and the left rear wheel LR do not slip, when a rotational speed of the right front wheel RF is greater than a rotational speed of the left rear wheel LR and a difference between the rotational speed of the right front wheel RF and the rotational speed of the left rear wheel LR is greater than a third preset rotational speed difference, for example, 50 rpm, controlling a decrease value of output torque of the drive motor M2 corresponding to the right front wheel RF within third preset duration, for example, 0.3s, to be greater than a decrease value of output torque of the drive motor M2 corresponding to the left rear wheel LR within the third preset duration, where the third preset rotational speed difference during downhill traveling is greater than a first preset rotational speed difference during flat road traveling.

Corresponding torque control performed when the other pair of diagonal wheels slip may also be obtained based on same control. Details are not described herein again.

Correspondingly, according to the anti-slip control method for an electric vehicle 50, when the electric vehicle tends to turning yawing because stability of the electric vehicle is affected by slipping of diagonal wheels and a rotational speed difference of non-slipping diagonal wheels exceeding a preset limit when the electric vehicle 50 travels downhill, the anti-slip control method can reversely suppress, by considering impact that yawing of the electric vehicle can be properly accelerated by gravity of the electric vehicle, a yawing trend of the electric vehicle in a timely manner by controlling torque of the non-slipping wheel to reduce speed torque.

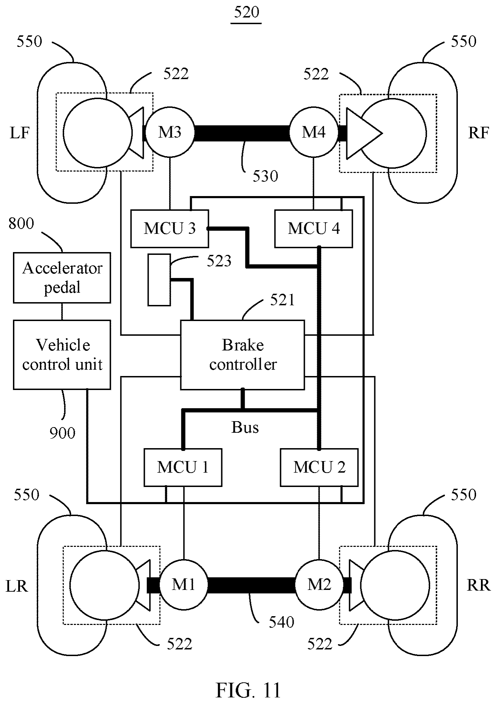

In another implementation form of the anti-slip control method for an electric vehicle according to the third aspect, FIG. 11 is used as an example. The anti-slip control method includes: in response to slipping of any wheel of an electric vehicle, for example, one of a left front wheel LF, a right front wheel RF, a left rear wheel LR, and a right rear wheel RR, controlling drive motors corresponding to the four wheels not to respond, within fourth duration, for example, 2s, to a torque output value signal indicated by an accelerator pedal 800 of the electric vehicle.

Correspondingly, when the electric vehicle 50 slips, if the electric vehicle continues to accelerate, there is a high possibility of instability. In this case, the anti-slip control method for an electric vehicle 50 can enable the electric vehicle 50 to rely, instead of responding to a torque indication of the accelerator pedal 800, on one or more of motor control units MCU 1, MCU 2, MCU 3, and MCU 4 to perform adaptive torque adjusting and braking when the vehicle slips, to enhance safety and stability of anti-slip control and accelerate anti-slip control.

Embodiments listed in this application are merely a part of this application. A person skilled in the art may obtain another anti-slip control embodiment based on an inventive concept of this application. Details are not described herein.

In conclusion, embodiments of this application provide a motor control unit, a powertrain, and an electric vehicle, applied to the field of electric vehicle technologies, to suppress slipping of an electric vehicle more quickly. The motor control unit is directly communicatively connected to a brake controller. The brake controller is configured to control four wheel end brake apparatuses of the electric vehicle. The motor control unit may control one drive motor of the electric vehicle to output torque to drive one or two wheels of the electric vehicle. In addition, the motor control unit may further indicate, in response to a slip rate of the one wheel driven by the one drive motor being greater than a preset slip rate, the brake controller to control the wheel end brake apparatus of the one wheel to brake the one wheel. Based on this, when one wheel of the electric vehicle slips, the motor control unit can directly control the brake controller, to reduce a slipping suppression delay, so as to suppress the slipping of the wheel more quickly.

In the several embodiments provided in this application, all functional modules may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor control unit of an electric vehicle, wherein the motor control unit is configured to control one drive motor to drive the electric vehicle and configured to control a plurality of wheel end brake apparatuses of the electric vehicle, and the plurality of wheel end brake apparatuses are respectively configured to brake a plurality of wheels of the electric vehicle; and the motor control unit is further configured to:
in a process of controlling the one drive motor to drive the electric vehicle, in response to slipping of one wheel in the plurality of wheels, control one wheel end brake apparatus corresponding to the one wheel to brake the one wheel.

2. The motor control unit according to claim 1, wherein the motor control unit is configured to:
obtain a slip rate of the one wheel through calculation based on a motor rotational speed signal output by a resolver of the one drive motor; or
obtain a slip rate of the one wheel based on a motor rotational speed signal output by the resolver of the one drive motor and a wheel speed signal of the one wheel; and
control, via a brake controller of the electric vehicle, the plurality of wheel end brake apparatuses to respectively brake the plurality of wheels.

3. The motor control unit according to either claim 1 or claim 2, wherein the motor control unit is further configured to:
in a case in which the one wheel slips, when a slip rate of the one wheel at a second moment is greater than a slip rate at a first moment, control braking force output by the wheel end brake apparatus of the one wheel at the second moment to be greater than braking force output at the first moment.

4. The motor control unit according to claim 3, wherein the motor control unit is further configured to:
in a case in which the one wheel slips, when a slip rate of the one wheel at a third moment is less than the slip rate at the second moment, control the drive motor corresponding to the one wheel to reduce output torque.

5. The motor control unit according to any one of claims 1 to 4, wherein the motor control unit is further configured to:
in a case in which the one wheel slips, control the one wheel end brake apparatus corresponding to the one wheel to brake the one wheel, to reduce a rotational speed of the one wheel to a preset rotational speed, wherein a difference between the preset rotational speed and a rotational speed of a wheel in the same row as the one wheel is less than a preset rotational speed difference.

6. The motor control unit according to any one of claims 1 to 5, wherein the one drive motor is further configured to drive two front wheels or two rear wheels of the electric vehicle, and the motor control unit is configured to:
control the one drive motor to reduce output torque in response to slipping of the two front wheels or slipping of the two rear wheels.

7. A powertrain, wherein the powertrain comprises one drive motor and the motor control unit according to any one of claims 1 to 6, and the powertrain is configured to drive two front wheels or two rear wheels of the electric vehicle.

8. An anti-slip control method for an electric vehicle, wherein the anti-slip control method is used to control, when an electric vehicle slips, wheel end brake apparatuses and drive motors that correspond to four wheels of the electric vehicle, and the anti-slip control method comprises:
in response to slipping of two of the wheels on a same side of the electric vehicle, controlling the wheel end brake apparatuses corresponding to the two wheels on the same side to perform braking;
in response to slipping of two of the wheels in a same row of the electric vehicle, controlling the wheel end brake apparatuses corresponding to the two wheels in the same row to perform braking; or
in response to slipping of two of the wheels at a same diagonal of the electric vehicle, controlling the wheel end brake apparatuses corresponding to the two wheels at the same diagonal to perform braking.

9. The anti-slip control method for an electric vehicle according to claim 8, wherein the anti-slip control method comprises:
in a case in which a slope of a road on which the electric vehicle travels is less than a preset slope value,
when either of the front row of wheels and the rear row of wheels slip, controlling a drive motor corresponding to the row of slipping wheels to reduce output torque, and controlling output torque of a drive motor corresponding to the other row of wheels to remain unchanged;
when either of the left side of wheels and the right side of wheels slip, controlling output torque of a drive motor corresponding to the side of slipping wheels to remain unchanged;
when either of two pairs of the diagonal wheels slip, controlling the drive motors corresponding to the four wheels to reduce output torque; or
when all the four wheels slip, controlling the drive motors corresponding to the four wheels to reduce output torque.

10. The anti-slip control method for an electric vehicle according to claim 9, wherein the anti-slip control method further comprises:
in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a first preset rotational speed difference, controlling a decrease value of output torque of a drive motor corresponding to the right front wheel within third preset duration to be greater than a decrease value of output torque of a drive motor corresponding to the left rear wheel within the third preset duration.

11. The anti-slip control method for an electric vehicle according to claim 8, wherein the anti-slip control method comprises:
in a case in which a slope of a road on which the electric vehicle travels is greater than preset slope value and the electric vehicle travels uphill,
when either of the front row of wheels and the rear row of wheels slip, controlling a drive motor corresponding to the row of slipping wheels to reduce output torque, and controlling a drive motor corresponding to the other row of wheels to increase output torque;
when either of the left side of wheels and the right side of wheels slip, controlling output torque of a drive motor corresponding to the side of slipping wheels to remain unchanged;
when either of two pairs of the diagonal wheels slip, controlling the drive motors corresponding to the four wheels to reduce output torque; or
when all the four wheels slip, controlling the drive motors corresponding to the four wheels to reduce output torque.

12. The anti-slip control method for an electric vehicle according to claim 11, wherein the anti-slip control method further comprises:
in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a second preset rotational speed difference, controlling a decrease value of output torque of a drive motor corresponding to the right front wheel within third preset duration to be greater than a decrease value of output torque of a drive motor corresponding to the left rear wheel within the third preset duration, wherein the second preset rotational speed difference is greater than first preset rotational speed difference.

13. The anti-slip control method for an electric vehicle according to claim 8, wherein the anti-slip control method further comprises:
in a case in which a slope of a road on which the electric vehicle travels is greater than preset slope value and the electric vehicle travels downhill,
when either of the front row of wheels and the rear row of wheels slip, controlling a drive motor corresponding to the row of slipping wheels to reduce output torque, and controlling a drive motor corresponding to the other row of wheels to reduce output torque;
when either of the left side of wheels and the right side of wheels slip, controlling output torque of a drive motor corresponding to the side of slipping wheels to remain unchanged;
when either of two pairs of the diagonal wheels slip, controlling the drive motors corresponding to the four wheels to reduce output torque; or
when all the four wheels slip, controlling the drive motors corresponding to the four wheels to reduce output torque.

14. The anti-slip control method for an electric vehicle according to claim 13, wherein the anti-slip control method comprises:
in a case in which the left front wheel and the right rear wheel slip and the right front wheel and the left rear wheel do not slip, when a rotational speed of the right front wheel is greater than a rotational speed of the left rear wheel and a difference between the rotational speed of the right front wheel and the rotational speed of the left rear wheel is greater than a third preset rotational speed difference, controlling a decrease value of output torque of a drive motor corresponding to the right front wheel within the third preset duration to be greater than a decrease value of output torque of a drive motor corresponding to the left rear wheel within the third preset duration, wherein the third preset rotational speed difference is less than first preset rotational speed difference.

15. The anti-slip control method for an electric vehicle according to any one of claims 8 to 14, wherein the anti-slip control method comprises: in response to slipping of any wheel of the electric vehicle, controlling the drive motors corresponding to the four wheels not to respond, within fourth duration, to a torque output value signal indicated by an accelerator pedal of the electric vehicle.
